# EUROPEAN PATENT APPLICATION

(11) **EP 4 528 489 A1**
(43) Date of publication of application: **26.03.2025**
(21) Application number: 23829937.4
(22) Date of filing: 13.06.2023
(51) Int. Cl.: G06F 8/71, G06F 9/445

(54) **VERSION CONTROL METHOD AND APPARATUS, AND ELECTRONIC DEVICE AND STORAGE MEDIUM**

(30) Priority: 01.07.2022 CN 202210774149
(71) Applicant: BEIJING YOUZHUJU NETWORK TECHNOLOGY CO. LTD., Beijing 101299 (CN)
(72) Inventor: ZOU, Zhigang, Beijing 100086 (CN); GAO, Chunxu, Beijing 100086 (CN)
(74) Representative: Williams, Michael David
(86) International application number: PCT/CN2023/099837
(87) International publication number: WO 2024/001754

(57) **Abstract**

The present disclosure provides a version control method and apparatus, an electronic device, and a storage medium. The version control method includes: in response to a data loading instruction, obtaining a plurality of pieces of data to be loaded, a data package corresponding to the plurality of pieces of data to be loaded, and a data package version of the data package; performing incremental processing on the data package version to obtain an incremental version; loading, for each piece of data to be loaded based on an item to be loaded that corresponds to the data to be loaded, the data to be loaded into an item table corresponding to the item to be loaded among at least one item table, to obtain loaded data, and using the incremental version as a data version of the loaded data; and using the incremental version as the data package version when the data version of the loaded data corresponding to each piece of data to be loaded is obtained.

## Description

### CROSS-REFERENCE TO RELATED APPLICATION(S)

The present disclosure claims priority to Chinese Patent Application No. 202210774149.X, filed with the China National Intellectual Property Administration on July 1, 2022, which is incorporated herein by reference in its entirety.

### FIELD

The present disclosure relates to the field of computer technologies, and for example, to a version control method and apparatus, an electronic device, and a storage medium.

### BACKGROUND

In product operation services, the selection of potential, high-quality, and trending products in an automatic or manual manner helps to precisely guide business attraction. In order to make effective use of these products, their relevant data can be loaded into an operation platform for use by operation personnel.

The data may change over time. In order to use data that matches a current actual situation, version control can be performed on the data during the process of loading the data into the operation platform. However, there has not yet been a relevant solution that can implement the above function.

### SUMMARY

The present disclosure provides a version control method and apparatus, an electronic device, and a storage medium, so as to ensure the consistency between a data version corresponding to each piece of data to be loaded and a data package version.

According to a first aspect, the present disclosure provides a version control method. The method may include:
in response to a data loading instruction, obtaining a plurality of pieces of data to be loaded, a data package corresponding to the plurality of pieces of data to be loaded, and a data package version of the data package,
where the data package corresponds to a pool to be loaded, the pool to be loaded includes an item pool or an item cluster pool to be loaded, the data package includes at least one item table, and the data to be loaded corresponds to an item to be loaded in the pool to be loaded;
performing incremental processing on the data package version to obtain an incremental version;
loading, for each piece of data to be loaded based on an item to be loaded that corresponds to the data to be loaded, the data to be loaded into an item table corresponding to the item to be loaded among the at least one item table, to obtain loaded data, and using the incremental version as a data version of the loaded data; and
using the incremental version as the data package version when the data version of the loaded data corresponding to each piece of data to be loaded is obtained.

According to a second aspect, the present disclosure further provides a version control apparatus. The apparatus may include:
a data package version obtaining module configured to, in response to a data loading instruction, obtain a plurality of pieces of data to be loaded, a data package corresponding to the plurality of pieces of data to be loaded, and a data package version of the data package, where the data package corresponds to a pool to be loaded, the pool to be loaded includes an item pool or an item cluster pool to be loaded, the data package includes at least one item table, and the data to be loaded corresponds to an item to be loaded in the pool to be loaded;
an incremental version obtaining module configured to perform incremental processing on the data package version to obtain an incremental version;
a data version obtaining module configured to load, for each piece of data to be loaded based on an item to be loaded that corresponds to the data to be loaded, the data to be loaded into an item table corresponding to the item to be loaded among the at least one item table, to obtain loaded data, and use the incremental version as a data version of the loaded data; and
a data package version obtaining module configured to use the incremental version as the data package version when the data version of the loaded data corresponding to each piece of data to be loaded is obtained.

According to a third aspect, the present disclosure further provides an electronic device. The electronic device may include:
one or more processors; and
a memory configured to store one or more programs; where
the one or more programs, when executed by the one or more processors, cause the one or more processors to implement the version control method described above.

According to a fourth aspect, the present disclosure further provides a computer-readable storage medium having a computer program stored thereon, where the computer program, when executed by a processor, causes the version control method described above to be implemented.

According to a fifth aspect, the present disclosure further provides a computer program product, which includes a computer program carried on a non-transitory computer-readable medium, where the computer program includes program code for performing the version control method described above.

### BRIEF DESCRIPTION OF THE DRAWINGS

FIG. 1 is a flowchart of a version control method according to an embodiment of the present disclosure;
FIG. 2a is a sequence diagram of data package deletion in a version control method according to an embodiment of the present disclosure;
FIG. 2b is a sequence diagram of data package viewing in a version control method according to an embodiment of the present disclosure;
FIG. 3a is a schematic diagram of product selection pool production in a version control method according to an embodiment of the present disclosure;
FIG. 3b is a schematic diagram of data transfer in a version control method according to an embodiment of the present disclosure;
FIG. 4 is a schematic diagram of a product package model in a version control method according to an embodiment of the present disclosure;
FIG. 5 is a flowchart of another version control method according to an embodiment of the present disclosure;
FIG. 6 is a flowchart of another version control method according to an embodiment of the present disclosure;
FIG. 7 is a flowchart of another version control method according to an embodiment of the present disclosure;
FIG. 8 is a sequence diagram of breakpoint resumption in a version control method according to an embodiment of the present disclosure;
FIG. 9 is a diagram of transfer of complete functions in a version control method according to an embodiment of the present disclosure;
FIG. 10a is a first sequence diagram of complete functions in a version control method according to an embodiment of the present disclosure;
FIG. 10b is a second sequence diagram of complete functions in a version control method according to an embodiment of the present disclosure;
FIG. 11 is a block diagram of a structure of a version control apparatus according to an embodiment of the present disclosure; and
FIG. 12 is a schematic diagram of a structure of an electronic device according to an embodiment of the present disclosure.

### DETAILED DESCRIPTION OF EMBODIMENTS

The embodiments of the present disclosure are described below with reference to the accompanying drawings. Although some embodiments of the present disclosure are shown in the accompanying drawings, the present disclosure may be implemented in various forms, and these embodiments are provided for understanding the present disclosure. The accompanying drawings and the embodiments of the present disclosure are for exemplary purposes only.

The plurality of steps described in method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include" used herein and the variations thereof are an open-ended inclusion, namely, "include". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

The concepts such as "first" and "second" mentioned in the present disclosure are only used to distinguish between different apparatuses, modules, or units, and are not used to limit the sequence or interdependence of functions performed by these apparatuses, modules, or units.

The modifiers "one" and "a plurality of' mentioned in the present disclosure are illustrative and not restrictive, and those skilled in the art should understand that unless the context indicates otherwise, the modifiers should be understood as "one or more".

The names of messages or information exchanged between a plurality of apparatuses in the implementations of the present disclosure are used for illustrative purposes only, and are not used to limit the scope of these messages or information.

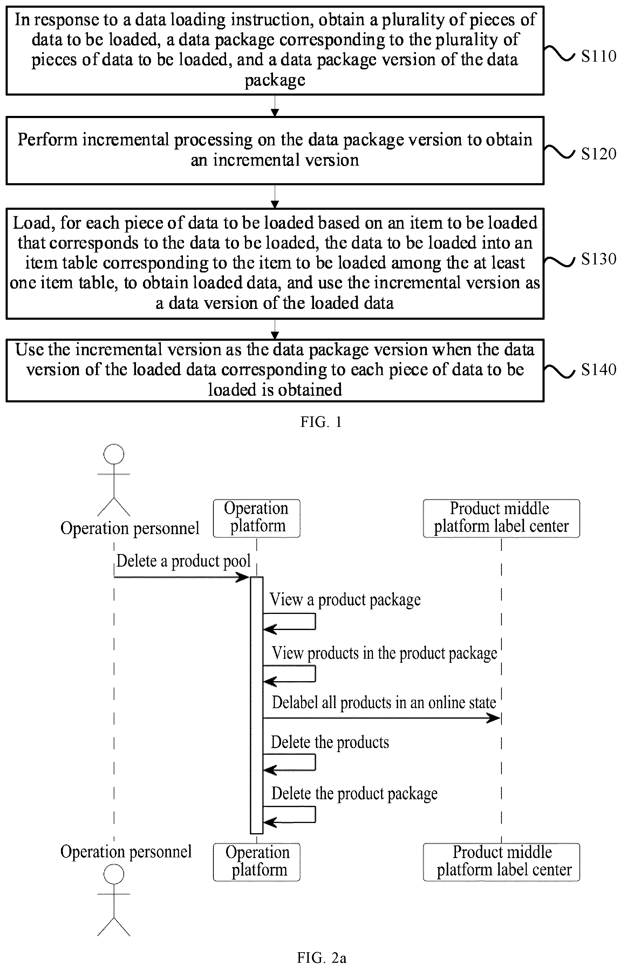

FIG. 1 is a flowchart of a version control method according to an embodiment of the present disclosure. This embodiment can be applied to the case of controlling a data version and a data package version in a data loading process. The method can be performed by a version control apparatus according to an embodiment of the present disclosure. The apparatus may be implemented by software and/or hardware, and may be integrated on an electronic device. The electronic device may be various terminal devices or servers.

Referring to FIG. 1, the method in the embodiment of the present disclosure includes the following steps.

S110: In response to a data loading instruction, obtain a plurality of pieces of data to be loaded, a data package corresponding to the plurality of pieces of data to be loaded, and a data package version of the data package, where the data package corresponds to a pool to be loaded, the pool to be loaded includes an item pool or an item cluster pool to be loaded, the data package includes at least one item table, and the data to be loaded corresponds to items to be loaded in the pool to be loaded.

The data loading instruction may be an instruction for loading the data to be loaded into the data package corresponding to the data to be loaded. In response to the data loading instruction, the plurality of pieces of data to be loaded, the data package, and the data package version of the data package are obtained. The data package can be directly obtained by the step described above, which indicates that the data package has been created in advance. Then, when the data package has not been created in advance, after the plurality of pieces of data to be loaded are obtained, the version control method described above may further include: creating the data package and setting a data package version of the data package as an initial version, thereby ensuring that the data package and the data package version of the data package can be successfully obtained later, where the initial version may be a preset data package version.

The data package corresponds to a pool to be loaded, which may be an item pool or item cluster pool to be loaded (i.e., having a data loading requirement). In practical application, the item pool may include at least one item to be loaded; and the item cluster pool may include at least one item cluster, where each item cluster may include at least one item to be loaded. The data to be loaded corresponds to the item to be loaded in the pool to be loaded, and the data package includes at least one item table. In practical application, each item table may correspond to one or more items to be loaded in the pool to be loaded. Therefore, the data loading process implemented based on the subsequent steps can be understood as the process of loading the data to be loaded that corresponds to each item to be loaded in the pool to be loaded into the corresponding item table in the data package.

S120: Perform incremental processing on the data package version to obtain an incremental version.

After the data package version is obtained, incremental processing may be performed on the data package version to obtain the incremental version. For example, a result obtained by adding N to the data package version is used as the incremental version, where N may be any positive integer.

S130: Load, for each piece of data to be loaded based on an item to be loaded that corresponds to the data to be loaded, the data to be loaded into an item table corresponding to the item to be loaded among the at least one item table, to obtain loaded data, and using the incremental version as a data version of the loaded data.

During one data loading process, it may be necessary to load a plurality of pieces of data to be loaded. In this case, the following steps may be performed for each piece of data to be loaded: determining, based on an item to be loaded that corresponds to the data to be loaded, an item table corresponding to the item to be loaded from the at least one item table, and loading the data to be loaded into the item table, thereby obtaining the loaded data corresponding to the item to be loaded; and using the previously obtained incremental version as the data version of the loaded data. In practical application, the data to be loaded may be an item identifier of the item to be loaded. During the data loading process, the corresponding item to be loaded can be accurately determined from the plurality of items to be loaded based on the item identifier, and then the corresponding item table can be accurately determined from the at least one item table, thus ensuring the accuracy of data loading. On this basis, fields of the item table may include at least a data package identifier of the data package, the item identifier of the item to be loaded, and a data version of already loaded data corresponding to the item to be loaded.

Since the item table is in the data package, the process of loading the data to be loaded into the item table can also be understood as a process of loading the data to be loaded into the data package. Therefore, the loaded data is both the data in the item table and the data in the data package.

In practical application, when the data package is not loaded with the already loaded data corresponding to the data to be loaded, the loading process of the data to be loaded can be understood as a process of directly inserting the data to be loaded into the data package. When the data package is loaded with the already loaded data, this case may occur when a piece of data has already been loaded into the data package previously but, over time, the value of the data has changed and thus needs to be reloaded into the data package. In this case, the loading process of the data to be loaded can be understood as a process of updating the already loaded data in the data package based on the data to be loaded, etc.

S140: Use the incremental version as the data package version when the data version of the loaded data corresponding to each piece of data to be loaded is obtained.

When the data version of the loaded data corresponding to each piece of data to be loaded is obtained, i.e., when each piece of data to be loaded has been loaded and the loaded data corresponding to each piece of data to be loaded has its own data version, the previously obtained incremental version can be used as the data package version, thereby ensuring the consistency of the data version of each piece of loaded data in the data package and the data package version.

According to the technical solution of this embodiment of the present disclosure, in response to the data loading instruction, the plurality of pieces of data to be loaded, the data package corresponding to the plurality of pieces of data to be loaded, and the data package version of the data package are obtained, where the data package corresponds to the pool to be loaded, the pool to be loaded includes the item pool or the item cluster pool to be loaded, the data package includes the at least one item table, and the data to be loaded corresponds to items to be loaded in the pool to be loaded; incremental processing is performed on the data package version to obtain the incremental version; for each piece of data to be loaded, the data to be loaded is loaded into an item table corresponding to the item to be loaded among the at least one item table based on the item to be loaded that corresponds to the data to be loaded, to obtain the loaded data, thereby implementing the process of loading the data to be loaded into the data package, and then the incremental version is used as the data version of the loaded data; and the incremental version is used as the data package version when the data version of the loaded data corresponding to each piece of data to be loaded is obtained. According to the technical solution described above, during the data loading process, the data version of the loaded data is controlled based on the incremental version obtained by performing incremental processing on the data package version, and after each piece of loaded data has its own data version, the data package version is controlled based on the incremental version. By a progressive version control policy, the consistency between the data version of each piece of loaded data in the data package and the data package version of the data package is ensured.

According to a technical solution, on the basis of the above embodiment, the version control method described above may further include: in response to a data package deletion instruction for the data package, setting a data state of data package data in the data package to an offline state; and setting a data package state of the data package to an ineffective state. The data package deletion instruction may be an instruction that is used to delete the data package described above and that is actively triggered by a human or automatically triggered when a preset deletion condition is met. In practical application, in order to store the data permanently, the deletion process herein can be understood as a process of stopping the application of the data package data in the data package by setting the data package state of the data package to the ineffective state. The data package data may be the loaded data above or the data loaded into the data package before responding to the current data loading instruction, etc., which is not limited herein. Therefore, in response to the data package deletion instruction, the data state of all the data package data in the data package can be set to the offline state, and then the data package state of the data package can be set to the ineffective state. In this way, each piece of data package data in the data package cannot be applied, thereby achieving an effect similar to deleting the data package. Any data that belongs to the data package can be considered as the data package data. In other words, the loaded data and the already loaded data that have been mentioned above, and previously loaded data, breakpoint loading data, and breakpoint deployment data that may be mentioned hereinafter, can all be considered as different representations of the data package data in different application scenarios.

On this basis, data package data in an online state is associated with a data package label corresponding to the data package, and the version control method described above may further include: deleting an association relationship between the data package data in the online state and the data package label. The data package label may be used to identify the data package to which the corresponding data package data belongs. Given the application scenarios that may be involved in the embodiments of the present disclosure, since the data package may include a plurality of pieces of data package data, one data package label (i.e., the data package label corresponding to the data package) may be associated with the plurality of pieces of data package data. During the deletion of the data package, in addition to changing the data package state and the data state, the association relationship between the data package data and the data package label may also be deleted, so that the data package data in the deleted data package is no longer associated with the remaining content, thereby implementing the complete deletion of the data package.

In order to understand the data package deletion solution described above, in combination with the application scenarios that may be involved in the embodiments of the present disclosure, the data package deletion solution will be illustrated in combination with examples. For example, referring to FIG. 2a, the data package is a data package of a product (hereinafter referred to as a product package), and the data package data is data of the product (hereinafter referred to as the product). A product pool to be deleted on a data platform is first obtained, then a product package corresponding to the product pool is viewed on an operation platform, and a product in the product package is viewed. Product package labels corresponding to products in the online state in the product package and stored on a product middle platform label center are removed. Then, all products in the product package are deleted, i.e., the product state of all the products is changed to the offline state, and then the product package is deleted, i.e., the product package state of the product package is set to the ineffective state, thereby implementing the effective deletion of the product pool by effectively deleting the product package.

According to another technical solution, the version control method described above may further include: in response to a data package viewing instruction for the data package, determining online data whose data version is the same as the data package version from the data package data in the data package; and returning the online data to an instruction triggering device for the data package viewing instruction. The data package viewing instruction may be an instruction triggered by a user to view the data package data in the data package. In response to the data package viewing instruction, since the loaded data that is loaded into the data package this time is data with viewing significance that matches a current actual situation, and the data version of the loaded data is the same as the data package version, it is possible to determine the online data whose data version is the same as the data package version from the data package data, and then return the online data to the instruction triggering device for the data package viewing instruction, e.g., a background front-end device where the user is located, so that the user can view the online data that matches the current actual situation. The online data herein is the same as the loaded data above. The different naming is only for the purpose of distinguishing different scenarios and does not limit their substantive meanings.

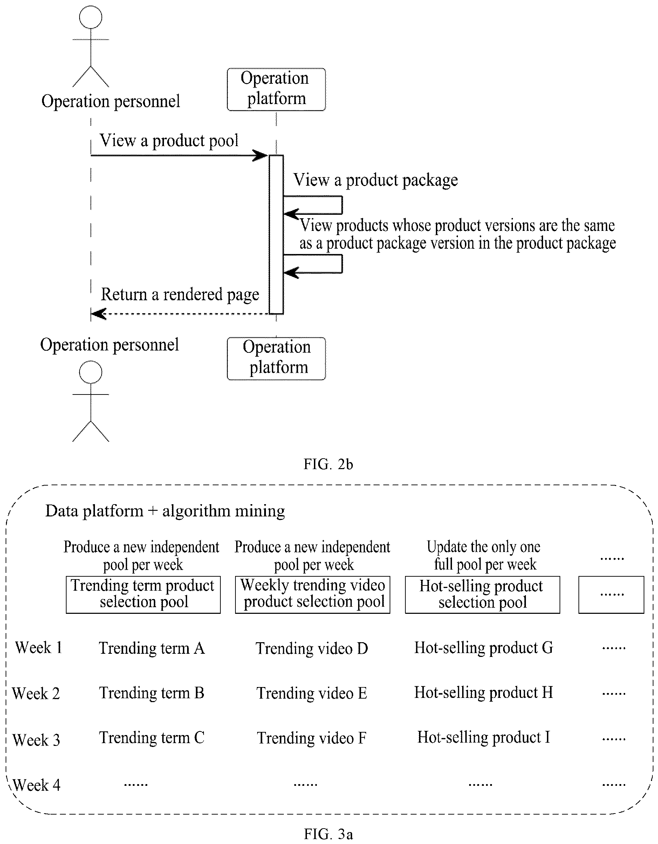

In order to more intuitively understand the data package viewing solution described above, in combination with the application scenarios that may be involved in the embodiments of the present disclosure, the data package deletion solution will be illustrated in combination with examples. For example, referring to FIG. 2b, the data package is still the product package, and the data package data is still the product. A product pool to be viewed on the data platform is obtained. Then, the product package corresponding to the product pool is viewed on the operation platform, and further products whose product versions are the same as a product package version in the product package are viewed. Next, these products are rendered into a page and returned, so that operation personnel can effectively view the corresponding products.

For the following two technical solutions, the application scenarios of the two technical solutions are illustrated herein first. For example, relevant data of products selected (or mined) automatically or manually may be stored on the data platform in the form of a product pool (also known as a product selection pool herein). The production characteristics of these product selection pools may be shown in FIG. 3a:
1. Each type of product selection pool is produced once according to a preset cycle (such as on a weekly, monthly, or yearly basis). Elaboration will be made below by taking a weekly preset cycle as an example.
2. For some types of product selection pools, a new independent pool (i.e., independent of a previously produced pool) is produced per week, such as trending terms, hot news, or hot topics. This is because the content varies greatly from week to week, and the related products selected in different weeks may be completely different. A lifecycle of this type of product selection pool is short.
3. For some types of product selection pools, there is always only one pool, and during each production, only products in the pool are updated (i.e., full update), such as for hot-selling products. Since the content changes each week but does not change greatly, there are few of this type of product selection pool, and they can be retained permanently.
4. There is often a huge quantity of products in the product selection pool.

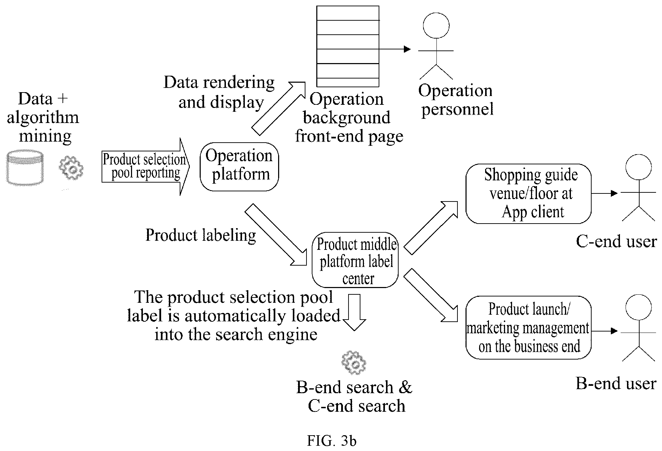

Given the application scenarios that may be involved in the embodiments of the present disclosure, in combination with a data transfer diagram shown in FIG. 3b (a process of reporting the product selection pool in the figure can be understood as the data loading process elaborated above), the standards for delivering the product selection pool to the operation platform may be as follows:
1. A plurality of product selection pools can be viewed on the operation platform. For fully updated product selection pools, only the latest version may be displayed, which has been elaborated in the data package viewing solution.
2. All product selection pools need to be permanently retained for operation, and can be manually determined whether to be deleted or automatically deleted after a long time, which has been elaborated in the data package deletion solution.
3. The products in the product selection pool need to be expressed to both the B-end (business end) and the C-end (consumer end). For example, on the B-end, a business is prompted that a product is related to this week's hot topic (in a product selection pool), and is suggested to launch promotional activities for it. For another example, on the C-end, products in a product selection pool are given exposure in a venue or floor on a shopping guide page. The expression manner may be to assign the product a product selection pool label associated with the product selection pool at the product middle platform label center. Since the product selection pool label can be automatically loaded into a search engine, the information expressed by both the B-end and C-end can be obtained by searching using their respective search engines.

Elaboration has been made above by taking the product selection pool as an example. Besides the product selection pool, service scenarios that may be involved in the embodiments of the present disclosure may also include a service scenario for a product selection cluster pool. The product selection pool can be understood as a product collection, while the product selection cluster pool can be understood as a collection of product collections. That is, there are many product selection clusters in the product selection cluster pool, and each product selection cluster can be considered as a product collection. For example, a collection of a plurality of toothbrushes of the same brand and series as an internet-famous trending toothbrush emerges as an overall cluster, with the plurality of toothbrushes being clustered based on the internet-famous trending toothbrush. Next, the data loading process in the two service scenarios of the product selection pool and the product selection cluster pool will be described. Taking the product selection pool as an example, an item pool elaborated below may be obtained by selecting products, similar to a means for producing the product selection pool, or by selecting or mining other non-saleable items, which is not limited herein. The situation with an item cluster pool is similar.

According to a technical solution, when the pool to be loaded includes the item pool, the data loading process has been elaborated in S130, and will not be repeated herein. In addition, the product selection pool exemplified above can be understood as an example of the item pool.

According to another technical solution, the pool to be loaded is the item cluster pool, the item cluster pool includes at least one item cluster, an item to be loaded in each item cluster includes a first item or a second item clustered based on the first item, and the at least one item table includes at least one base table, and at least one relationship table associated with each base table; and the loading, for each piece of data to be loaded based on an item to be loaded that corresponds to the data to be loaded, the data to be loaded into an item table corresponding to the item to be loaded among at least one item table, to obtain loaded data may include: for each item cluster, using data to be loaded that corresponds to the first item in the item cluster as first loading data, and using data to be loaded that corresponds to each second item in the item cluster as second loading data; loading the first loading data into a target table corresponding to the first item in the item cluster among the at least one base table, to obtain loaded data of the first item in the item cluster; and for each piece of second loading data, using the second item corresponding to the second loading data in the item cluster as a current item, and loading the second loading data into the relationship table corresponding to the current item among the at least one relationship table associated with the target table, to obtain loaded data of the current item.

The item cluster pool may include at least one item cluster. Each item cluster may include a first item, and at least one second item clustered based on the first item. Both the first item and the second item herein are the items to be loaded above. The at least one item table may include at least one base table (i.e., the item table corresponding to the first item), and at least one relationship table associated with each base table. In practical application, the relationship table may represent a relationship between the second item clustered based on the first item and the first item. On this basis, the loading processes of the first loading data of the first item and the second loading data of each second item in the item cluster may be implemented for each item cluster by the following steps: loading the first loading data into the target table corresponding to the first item among the at least one base table, thereby implementing the loading process of the first loading data; and on this basis, for each piece of second loading data, loading the second loading data into the relationship table corresponding to the current item among the at least one relationship table associated with the target table, thereby implementing the loading process of the second loading data.

In practical application, fields of each base table may include a data package identifier of a data package, an item identifier of a first item, and a data version of already loaded data corresponding to the first item; and fields of each relationship table may include a data package identifier, an item identifier, a relationship identifier for identifying the relationship between the first item and a second item, and a data state and a data version of already loaded data corresponding to the second item. The second item can be uniquely determined from the at least one second item according to the item identifier and the relationship identifier, and the data state and the data version herein can also correspond to the uniquely determined second item.

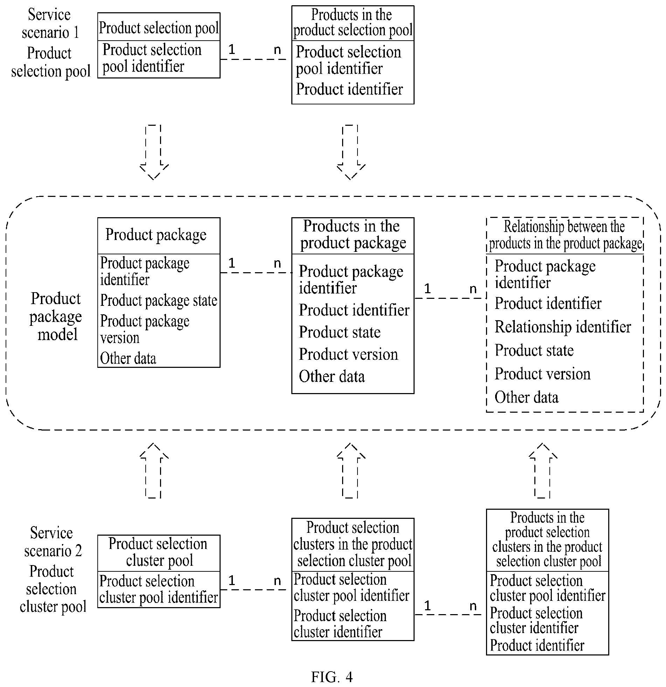

In practical application, the data to be loaded in the two data loading solutions described above may be raw data directly obtained from the data platform, or operation data that is obtained by processing the raw data and can be applied by the user. For example, for each piece of raw data, fields that do not need to be involved in the operation process can be filtered out, structural alignment can be performed, or fields with different service meanings can be converted. The data processing process may be implemented based on a data package model (i.e., a database). On this basis, in order to understand the data loading process described above, exemplary description will be made still by taking the product package and the products above as an example. For example, refer to FIG. 4:

In the service scenario 1 of the product selection pool, fields of a product selection pool table associated with the product selection pool may include a product selection pool identifier, each product selection pool may include n products, and fields of a product table associated with any product may include a product selection pool identifier and a product identifier. The product package model can convert the product selection pool table into a product package table associated with the product package, and convert the product table into a product table associated with the product package table described above. Fields of the product package table may include a product package identifier, a product package state, a product package version, and other data. Fields of a product table associated with the product package table may include a product package identifier, a product identifier, a product state, a product version, and other data.

In the service scenario 2 of the product selection cluster pool, fields of a product selection cluster pool table associated with the product selection cluster pool may include a product selection cluster pool identifier, each product selection cluster pool may include n product selection clusters, and fields of a product selection cluster table associated with any product selection cluster may include the product selection cluster pool identifier and a product selection cluster identifier; and each product selection cluster may include n products (e.g., n toothbrushes of the same brand and series as the internet-famous trending toothbrush in the above example), and the fields of a product table associated with any product may include the product selection cluster pool identifier, the product selection cluster identifier, and a product identifier. The product package model can convert the product selection cluster pool table into a product package table associated with the product package, convert the product selection cluster table into the product table associated with the product package table described above, and then convert the product table into the relationship table associated with the product table described above. The situation of the product package table and product table in the service scenario 2 is the same as that in the service scenario 1, and the fields of the relationship table may include the product package identifier, the product identifier, the relationship identifier, the product state, the product version, and other data. In other words, in order to meet the requirements of the service scenario 2, on the basis of the service scenario 1, the product package model bifurcates into a layer of relationship table.

In the above example, the product package model (i.e., the database) carries a variety of service scenarios related to product selection, thus being applicable to any type of product selection service and having good universality.

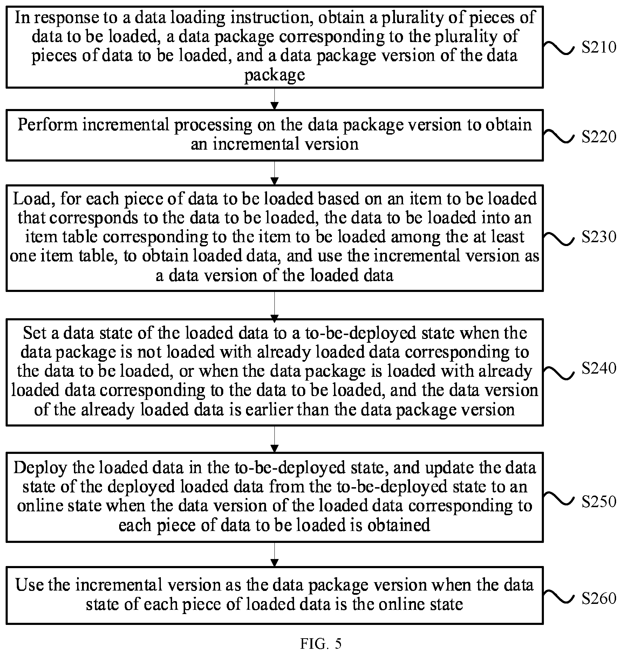

FIG. 5 is a flowchart of another version control method according to an embodiment of the present disclosure. This embodiment will be described on the basis of the solution in the above embodiment. In this embodiment, after the loaded data is obtained, the version control method described above may further include: setting a data state of the loaded data to a to-be-deployed state when the data package is not loaded with already loaded data corresponding to the data to be loaded, or when the data package is loaded with already loaded data corresponding to the data to be loaded, and the data version of the already loaded data is earlier than the data package version; and the using the incremental version as the data package version when the data version of the loaded data corresponding to each piece of data to be loaded is obtained includes: deploying the loaded data in the to-be-deployed state, and updating the data state of the deployed loaded data from the to-be-deployed state to an online state when the data version of the loaded data corresponding to each piece of data to be loaded is obtained; and using the incremental version as the data package version when the data state of each piece of loaded data is the online state. The terms that are the same as or corresponding to the above embodiment will not be described herein again.

Correspondingly, as shown in FIG. 5, the method in this embodiment may include the following steps.

S210: In response to a data loading instruction, obtain a plurality of pieces of data to be loaded, a data package corresponding to the plurality of pieces of data to be loaded, and a data package version of the data package, where the data package corresponds to a pool to be loaded, the pool to be loaded includes an item pool or an item cluster pool to be loaded, the data package includes at least one item table, and the data to be loaded corresponds to an item to be loaded in the pool to be loaded.

S220: Perform incremental processing on the data package version to obtain an incremental version.

S230: Load, for each piece of data to be loaded based on an item to be loaded that corresponds to the data to be loaded, the data to be loaded into an item table corresponding to the item to be loaded among the at least one item table, to obtain loaded data, and use the incremental version as a data version of the loaded data.

S230 and S240 are sequentially performed for each piece of data to be loaded. After S230, the data to be loaded can be loaded into the corresponding item table, i.e., loaded into the data package containing the item table.

S240: Set a data state of the loaded data to a to-be-deployed state when the data package is not loaded with already loaded data corresponding to the data to be loaded, or when the data package is loaded with already loaded data corresponding to the data to be loaded, and the data version of the already loaded data is earlier than the data package version.

As described above, there may be the already loaded data corresponding to the data to be loaded in the data package, or there may not be such already loaded data; and on such a basis, in the former case, the data version of the already loaded data may be earlier than the data package version, or the same as the data package version. Given the application scenarios that may be involved in the embodiments of the present disclosure, for already loaded data whose data version is the same as the data package version, its data state is the online state, i.e., the already loaded data has been deployed; for already loaded data whose data version is earlier than the data package version, its data state is the offline state, i.e., the already loaded data has not been deployed; and in the case that there is no corresponding already loaded data, the corresponding data to be loaded needs to be deployed. Therefore, when the loaded data does not correspond to the already loaded data or the data version of the corresponding already loaded data is earlier than the data package version, the data state of the loaded data may be set to the to-be-deployed state. The setting process is a process from none to the to-be-deployed state for the former, and a process from the offline state to the to-be-deployed state for the latter, so that the loaded data can be deployed later.

The process of setting the data version of the loaded data and the process of setting the data state of the loaded data can be performed successively or simultaneously, which is not limited herein. In addition, the online state can be understood as a state of currently being applied, and the offline state can be understood as a state of currently being not applied. In combination with the application scenarios that may be involved in the embodiments of the present disclosure, in the case of full pool synchronization, after the above steps are combined with the subsequent steps, only items that are newly added to the pool or items that are already in the pool but are currently being not applied can be deployed with no need to repeatedly deploy the items that are already in the pool and are currently being applied, thus ensuring the deployment efficiency.

S250: Deploy the loaded data in the to-be-deployed state, and update the data state of the deployed loaded data from the to-be-deployed state to an online state when the data version of the loaded data corresponding to each piece of data to be loaded is obtained.

When each piece of loaded data has its own data version, the loaded data in the to-be-deployed state can be deployed, and the data state of the deployed loaded data is updated from the to-be-deployed state to the online state. In practical application, it is possible to sequentially perform a deployment operation and a data state update operation for each piece of loaded data in the to-be-deployed state, or perform the data state update operation after the deployment operation is performed for all the loaded data in the to-be-deployed state, etc., which is not limited herein. The implementation of the deployment operation herein may be related to the service, such as the labeling operation elaborated above (i.e., the operation of assigning the label to the data package), or sending messages to other services to notify them that related operations are performed, etc., which are not limited herein.

S260: Use the incremental version as the data package version when the data state of each piece of loaded data is the online state.

When the data state of each piece of loaded data is the online state, the incremental version is used as the data package version, so that the data package data (i.e., the loaded data herein) whose data version is consistent with the data package version in the data package is all in the online state.

According to the technical solution of this embodiment of the present disclosure, the data state of the loaded data with deployment requirements is set to the to-be-deployed state, then the loaded data in the to-be-deployed state is deployed, and the data state of the deployed loaded data is updated to the online state, so that when the data state of each piece of loaded data is the online state, the incremental version is used as the data package version. This means that by determining whether the data state is the online state and/or whether the data version is consistent with the data package version, the loaded data obtained after the data loading operation can be accurately queried from the data package data in the data package. The loaded data can be considered as data with operation value that matches the current actual situation.

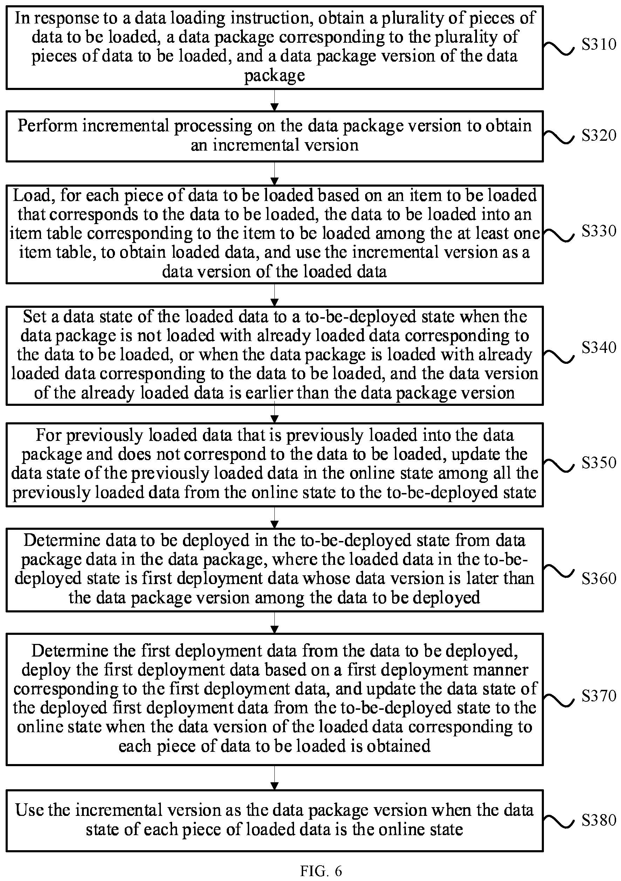

FIG. 6 is a flowchart of another version control method according to an embodiment of the present disclosure. This embodiment will be described on the basis of the solution in the above embodiment. In this embodiment, the version control method described above may further include: for previously loaded data that is previously loaded into the data package and does not correspond to the data to be loaded, updating the data state of the previously loaded data in the online state among all the previously loaded data from the online state to the to-be-deployed state; and determining data to be deployed that is in the to-be-deployed state from data package data in the data package, where the loaded data in the to-be-deployed state is first deployment data whose data version is later than the data package version among the data to be deployed; and the deploying the loaded data in the to-be-deployed state, and updating the data state of the deployed loaded data from the to-be-deployed state to an online state may include: determining the first deployment data from the data to be deployed, deploying the first deployment data based on a first deployment manner corresponding to the first deployment data, and updating the data state of the deployed first deployment data from the to-be-deployed state to the online state. The terms that are the same as or corresponding to the above embodiment will not be described herein again.

Correspondingly, as shown in FIG. 6, the method in this embodiment may include the following steps.

S310: In response to a data loading instruction, obtain a plurality of pieces of data to be loaded, a data package corresponding to the plurality of pieces of data to be loaded, and a data package version of the data package, where the data package corresponds to a pool to be loaded, the pool to be loaded includes an item pool or an item cluster pool to be loaded, the data package includes at least one item table, and the data to be loaded corresponds to an item to be loaded in the pool to be loaded.

S320: Perform incremental processing on the data package version to obtain an incremental version.

S330: Load, for each piece of data to be loaded based on an item to be loaded that corresponds to the data to be loaded, the data to be loaded into an item table corresponding to the item to be loaded among the at least one item table, to obtain loaded data, and use the incremental version as a data version of the loaded data.

S340: Set a data state of the loaded data to a to-be-deployed state when the data package is not loaded with already loaded data corresponding to the data to be loaded, or when the data package is loaded with already loaded data corresponding to the data to be loaded, and the data version of the already loaded data is earlier than the data package version.

S50: For previously loaded data that is previously loaded into the data package and does not correspond to the data to be loaded, update the data state of the previously loaded data in the online state among all the previously loaded data from the online state to the to-be-deployed state.

The data package may include loaded data that is previously loaded into the data package and corresponds to a piece of data to be loaded. The data package may also include previously loaded data that is previously loaded into the data package and does not correspond to any piece of data to be loaded, which indicates that the previously loaded data does not match the current actual situation and cannot be in the online state that can represent currently being applied. Therefore, the data state of the previously loaded data in the online state among all the previously loaded data can be updated from the online state to the to-be-deployed state.

S360: Determine data to be deployed that is in the to-be-deployed state from data package data in the data package, where the loaded data in the to-be-deployed state is first deployment data whose data version is later than the data package version among the data to be deployed.

Data package data in the to-be-deployed state among the data package data is used as the data to be deployed. At this point, the data to be deployed may be the loaded data in the to-be-deployed state, or the previously loaded data in the to-be-deployed state. The difference between the two is that the data version of the former is later than the data package version, and the data version of the latter is the same as the data package version, which is the key to distinguishing between the two in subsequent processes.

S370: Determine the first deployment data from the data to be deployed, deploy the first deployment data based on a first deployment manner corresponding to the first deployment data, and update the data state of the deployed first deployment data from the to-be-deployed state to the online state when the data version of the loaded data corresponding to each piece of data to be loaded is obtained.

The first deployment data (i.e., the loaded data in the to-be-deployed state) whose data version is later than the data package version is determined from the data to be deployed, and then the first deployment data is deployed based on the first deployment manner corresponding to the first deployment data, thereby achieving the effect of targeted deployment for the first deployment data.

S380: Use the incremental version as the data package version when the data state of each piece of loaded data is the online state.

According to the technical solution of this embodiment of the present disclosure, the data state of the previously loaded data in the online state is updated from the online state to the to-be-deployed state. At this point, the data to be deployed may be the loaded data in the to-be-deployed state or the previously loaded data in the to-be-deployed state; and on this basis, given the difference between the two, the first deployment data (i.e., the loaded data in the to-be-deployed state) is determined from the data to be deployed based on a numerical relationship between the data version and the data package version, making it possible to deploy the first deployment data based on the first deployment manner corresponding to the first deployment data, thereby achieving the effect of targeted deployment for the first deployment data.

According to a technical solution, on the basis of the above embodiment, the previously loaded data in the to-be-deployed state is second deployment data whose data version is the same as the data package version among the data to be deployed, and the version control method described above may further include: determining the second deployment data from the data to be deployed, deploying the second deployment data based on a second deployment manner corresponding to the second deployment data, and updating the data state of the deployed second deployment data from the to-be-deployed state to an offline state, thereby ensuring the effect of targeted deployment for the second deployment data. On this basis, the first deployment manner may include adding a data package label corresponding to the data package, thereby associating the data package data in the online state with the data package; and/or the second deployment manner may include deleting the data package label corresponding to the data package, so that the data package data in the offline state is no longer associated with the data package. In combination with the application scenarios that may be involved in the embodiments of the present disclosure, the second deployment data that needs to be removed from a full pool can be delabeled in time in the case of full pool synchronization, thereby effectively solving the problem that the data package label is contaminated.

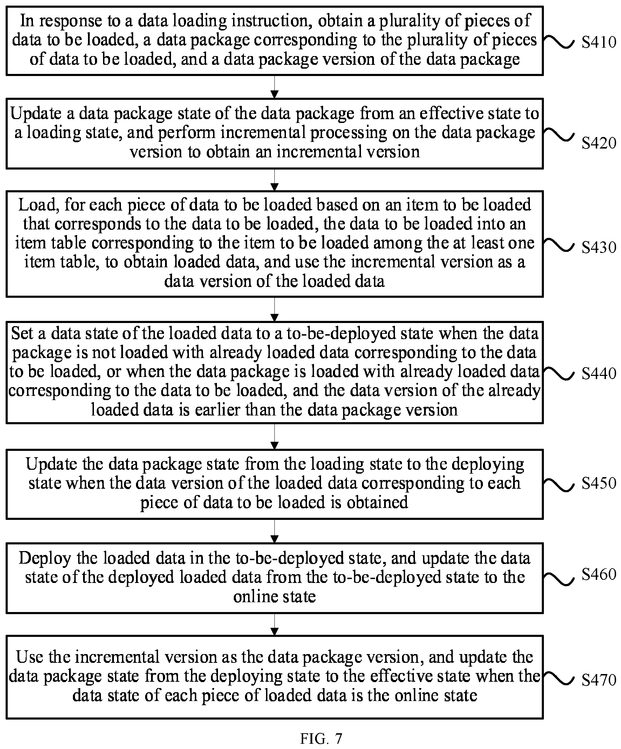

FIG. 7 is a flowchart of another version control method according to an embodiment of the present disclosure. This embodiment will be described on the basis of the solution in the above embodiment. In this embodiment, after the data package corresponding to the plurality pieces of data to be loaded is obtained, the version control method described above may further include: updating a data package state of the data package from an effective state to a loading state; updating the loading state to a deploying state after each piece of data to be loaded has been loaded; and updating the deploying state to the effective state when the data state of each piece of loaded data is the online state. The terms that are the same as or corresponding to the above embodiment will not be described herein again.

Correspondingly, as shown in FIG. 7, the method in this embodiment may include the following steps.

S410: In response to a data loading instruction, obtain a plurality of pieces of data to be loaded, a data package corresponding to the plurality of pieces of data to be loaded, and a data package version of the data package, where the data package corresponds to a pool to be loaded, the pool to be loaded includes an item pool or an item cluster pool to be loaded, the data package includes at least one item table, and the data to be loaded corresponds to an item to be loaded in the pool to be loaded.

S420: Update a data package state of the data package from an effective state to a loading state, and perform incremental processing on the data package version to obtain an incremental version.

In response to the data loading instruction, if the data package can be obtained, it indicates that the data package has been previously created and is currently in the effective state. In order to use the data package state and data package version of the data package jointly as indicators to identify the start and end of different processes (such as a data loading process, a data deployment process, and a data application process), the data state may be updated from the effective state to the loading state herein, thereby indicating the start of the data loading process.

S430: Load, for each piece of data to be loaded based on an item to be loaded that corresponds to the data to be loaded, the data to be loaded into an item table corresponding to the item to be loaded among the at least one item table, to obtain loaded data, and use the incremental version as a data version of the loaded data.

S440: Set a data state of the loaded data to a to-be-deployed state when the data package is not loaded with already loaded data corresponding to the data to be loaded, or when the data package is loaded with already loaded data corresponding to the data to be loaded, and the data version of the already loaded data is earlier than the data package version.

S450: Update the data package state from the loading state to the deploying state when the data version of the loaded data corresponding to each piece of data to be loaded is obtained.

When the data version of the loaded data corresponding to each piece of data to be loaded is obtained, it indicates that all the data to be loaded has been loaded. Therefore, the data package state can be updated from the loading state to the deploying state, thereby marking the end of the data loading process and the start of the data deployment process.

S460: Deploy the loaded data in the to-be-deployed state, and update the data state of the deployed loaded data from the to-be-deployed state to the online state.

S470: Use the incremental version as the data package version, and update the data package state from the deploying state to the effective state when the data state of each piece of loaded data is the online state.

When the data state of each piece of loaded data is the online state, it indicates that all the loaded data in the data package matches the current actual situation and has certain operation value. Therefore, the data package state can be updated from the deploying state to the effective state, thereby marking the end of the data deployment process and the start of the data application process.

According to the technical solution of this embodiment of the present disclosure, by updating the data package state at different stages, the data package state and the data package version can be jointly used as indicators to mark the start and end of different processes, thereby ensuring the smooth execution of the whole process.

According to a technical solution, on the basis of the above embodiment, the version control method may described above further include: in response to a breakpoint resumption instruction, obtaining the data package state; and determining, based on the data package state, to perform an update operation on the obtained data to be loaded or on the loaded data in the to-be-deployed state, and performing the update operation based on a determination result. In combination with the application scenarios that may be involved in the embodiments of the present disclosure, when responding to the data loading instruction, it may be necessary to load a large amount of data to be loaded from the data platform. In this case, the data loading process can be implemented by batch loading. However, during this period, the situation that part of the data to be loaded is successfully loaded, and part of the data to be loaded is unsuccessfully loaded may occur due to uncontrollable problems such as network abnormality. In the case of the above situation, in order to avoid repeated loading of the data to be loaded that has been loaded or repeated deployment of the data to be deployed that has been deployed, a breakpoint resumption function may be implemented by triggering the breakpoint resumption instruction and then responding to the breakpoint resumption instruction. In response to the triggered breakpoint resumption instruction, the data package state is obtained. Since the data package state can indicate whether the current process is the data loading process or the data deployment process, it can be determined to perform an update operation on the obtained data to be loaded (this belongs to the situation that the current process is the data loading process and part of the obtained data to be loaded has been loaded) or on the loaded data in the to-be-deployed state (this belongs to the situation that the current process is the data deployment process and part of the loaded data in the to-be-deployed state has been deployed) depending on the data package state. Then the update operation may be performed based on the determination result, so as to implement the breakpoint resumption function, i.e., the function of resuming loading or deployment from a breakpoint, thereby ensuring the timeliness of data processing. In fact, the data package state is determined based on the version control mechanism described above, and thus the breakpoint resumption function herein can also be considered as being implemented under the version control mechanism described above.

On this basis, when the data package state is the loading state, the determination result is to perform the update operation on the obtained data to be loaded; the performing the update operation based on a determination result may include: determining historical loaded data whose data version is earlier than or the same as the data package version from the data package data in the data package, and using data to be loaded that corresponds to the historical loaded data among the obtained data to be loaded as breakpoint loading data; and updating the obtained data to be loaded based on the breakpoint loading data. The historical loaded data can be considered as data that is previously loaded into the data package. The data may include data that needs to be loaded into the data package this time, or data that does not need to be loaded into the data package this time. Therefore, the breakpoint loading data that needs to be loaded this time but has not been loaded into the data package can be determined from the obtained data to be loaded based on the historical loaded data, and then the obtained data to be loaded is updated based on the breakpoint loading data, so that only the breakpoint loading data is loaded later, thereby implementing a breakpoint loading function.

When the data package state is the deploying state, the determination result is to perform the update operation on the loaded data in the to-be-deployed state; the performing the update operation based on a determination result may include: determining breakpoint deployment data in the to-be-deployed state from the data package data in the data package, and updating the loaded data in the to-be-deployed state based on the breakpoint deployment data. The data package data that has been deployed in the data package is either in the online state or the offline state. Only data package data that has not been deployed is in the to-be-deployed state. Therefore, the data package data in the to-be-deployed state can be considered as the breakpoint deployment data, so that only the breakpoint deployment data is deployed later, thereby implementing a breakpoint deployment function.

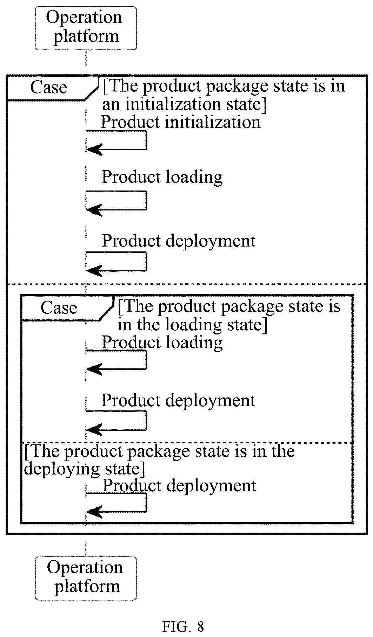

In order to understand the breakpoint resumption solution described above, exemplary description will be made still by taking the product package and the products in the above examples as an example. For example, referring to FIG. 8, in response to the breakpoint resumption instruction, when the product package state is in an initialization state, it indicates that an initialization stage has not been completed, and a product initialization process, a product loading process, and a product deployment process may be performed; when the product package state is in the loading state, it indicates that the initialization stage has been completed, but a loading stage has not been completed, and the product loading process and the product deployment process may be performed; and when the product package state is in the deploying state, it indicates that the initialization stage and the loading stage have been completed, but a deployment stage has not been completed, and the product deployment process may be performed. In practical application, in the service scenario 1, the products described above may be products in the product package; and in the service scenario 2, the products described above may be products represented by the relationship between the products in the product package.

According to another technical solution, on the basis of the above embodiment, the updating the loading state to a deploying state after each piece of data to be loaded has been loaded may include: updating the loading state to a loaded state after each piece of data to be loaded has been loaded; and in response to a data deployment instruction input by a user, updating the loaded state to the deploying state; and the deploying the loaded data in the to-be-deployed state when the data version of the loaded data corresponding to each piece of data to be loaded is obtained may include: deploying the loaded data in the to-be-deployed state when the data version of the loaded data corresponding to each piece of data to be loaded is obtained, and the data package is in the deploying state. By setting the loaded state for separating the loading state from the deploying state, the loaded data in the loaded state in the data package can be viewed by the user. Moreover, in the loaded state, the user can determine whether to deploy the loaded data in the to-be-deployed state, and when the user determines to deploy the loaded data in the to-be-deployed state, the loaded state is updated to the deploying state, thereby implementing a data deployment function. In the above technical solution, the loading and deployment operations are decoupled, so that the user can view the loaded data in advance in the case that it takes a long time to complete the deployment operation. In addition, the data throughput capacity of the operation platform can be improved.

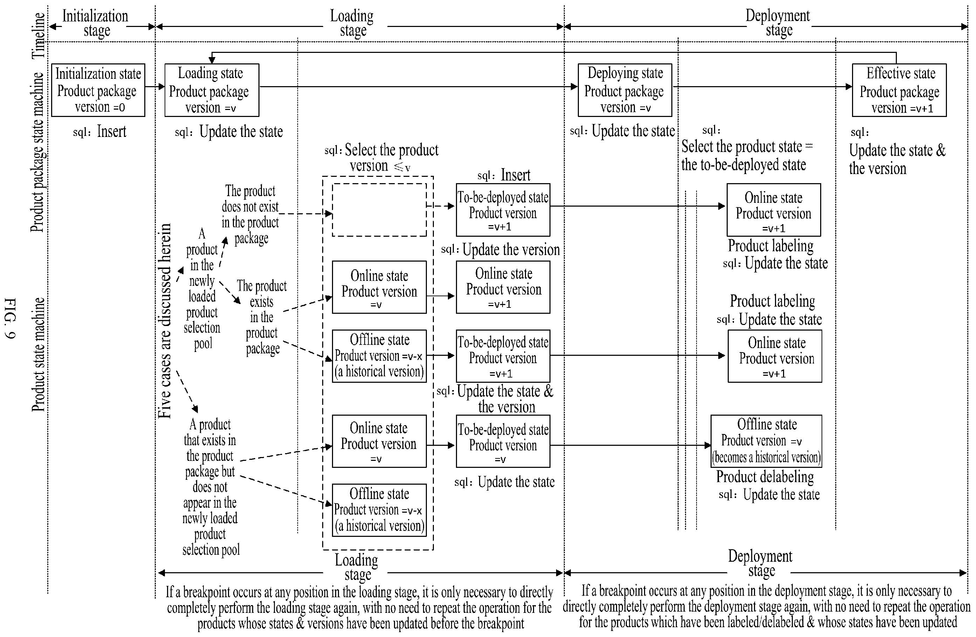

In order to understand the plurality of technical solutions described above as a whole, exemplary description will be made still by taking the product package and the products in the above examples as an example. For example, referring to FIG. 9, taking the service scenario 1 as an example, after the data platform notifies the operation platform that a product selection pool is ready, it may be first determined whether there is a product package corresponding to the product selection pool in the operation platform. If there is no product package corresponding to the product selection pool in the operation platform, a product package is created in the initialization stage, with the product package state being the initialization state, and the product package version being 0 (which can be implemented by inserting a statement into Structured Query Language (SQL)). Then, the loading stage is entered, and the initialization state is updated to the loading state. If there is a product package corresponding to the product selection pool in the operation platform, it indicates that there is previously a corresponding product package in the effective state (assuming that its product package version is v herein), then the loading stage is directly entered, and the product package state is updated from the effective state to the loading state.

In the loading stage, the following two cases may be discussed:
Case 1: For any product X in the newly loaded (i.e., ready) product selection pool, two subcases are further discussed herein. Case 11) When X does not exist in the product package, which belongs to the case that X cannot be queried through the product version ≤ v, X may be directly loaded into the product package. In this case, the product state of X is the to-be-deployed state, and the product version of X is v+1. Case 12) When X exists in the product package, which belongs to the case that X can be queried through the product version ≤ v. If the queried X is in the online state, the product version of X may be directly iterated by 1 to be updated to v+1, and X itself may be updated correspondingly. If the queried X is in the offline state, which indicates that its product version is in a historical version, the offline state may be updated to the to-be-deployed state, its product version may be updated to v+1, and X itself may be updated correspondingly.
Case 2: For any product Y that exists in the product package but does not appear in the newly loaded product selection pool, two subcases are further discussed herein. Case 21) If Y is in the online state, its product state may be updated to the to-be-deployed state, and the product version remains at v. Case 22) If Y is in the offline state, there is no need for any processing, i.e., the product state and the product version are kept unchanged.

At this point, after each X and each Y have been processed, the flow is advanced from the loading stage to the deployment stage, and the product package state is updated from the loading state to the deploying state. A product Z in the to-be-deployed state in the product package is queried. Taking two deployment manners including labeling (i.e., adding the product package label corresponding to the product package) and delabeling (i.e., removing the product package label) as an example herein, Z with a product version v+1 is labeled, and Z with a product version v is delabeled, thereby completing the deployment of each Z. Then, the product package state is updated from the deploying state to the effective state, and the product package version is iterated by 1 to obtain v+1. At this point, the product versions of all Xs that need to be updated are consistent with the product package version, and the product state is all the online state. Moreover, the product versions of Ys that do not need to be updated are all earlier than the product package version, and the product state is all the offline state.

Besides version control, the above technical solution also has the following advantages:
1. When a breakpoint occurs at any position in the loading stage, it is only necessary to directly completely perform the loading stage again. The above solution determines that there is no need to repeat the operation of the products whose product states & product versions have been updated before the breakpoint. Similarly, when a breakpoint occurs at any position in the deployment stage, it is only necessary to directly completely perform the deployment stage again. The above solution determines that there is no need to repeat the operation for the products which have been labeled/delabeled & whose product states have been updated.
2. With the manner of state and progressive version, the system instability caused by data and long transactions can be avoided, thereby improving stability and throughput capacity of the system. In addition, in combination with the first point, the completion state of data synchronization before the breakpoint can be intelligently remembered without the manner of one-time full synchronization plus transaction.
3. Since the data platform often notifies the operation platform to load the latest product selection pool by means of asynchronous messaging, in cases of temporary network congestion or other situations, it may cause a plurality of retransmitted messages to be backlogged and concurrently arrive at the operation platform at the time point of network recovery. Therefore, a CASABA approach is used herein to advance the state to avoid potential concurrency problems and improve security. An example of the CASABA approach is as follows: When the product package state (status) is updated from the deploying state (deploying) to the effective state (effective), the manner of update set status = 'effective', version = v+1 where status = 'deploying' and version = v can be used, where version may represent the product package version.

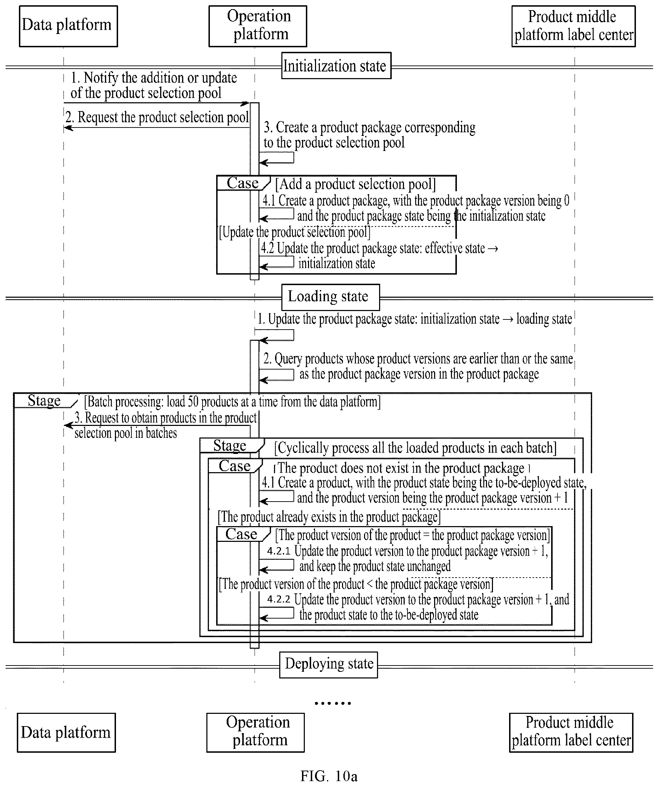

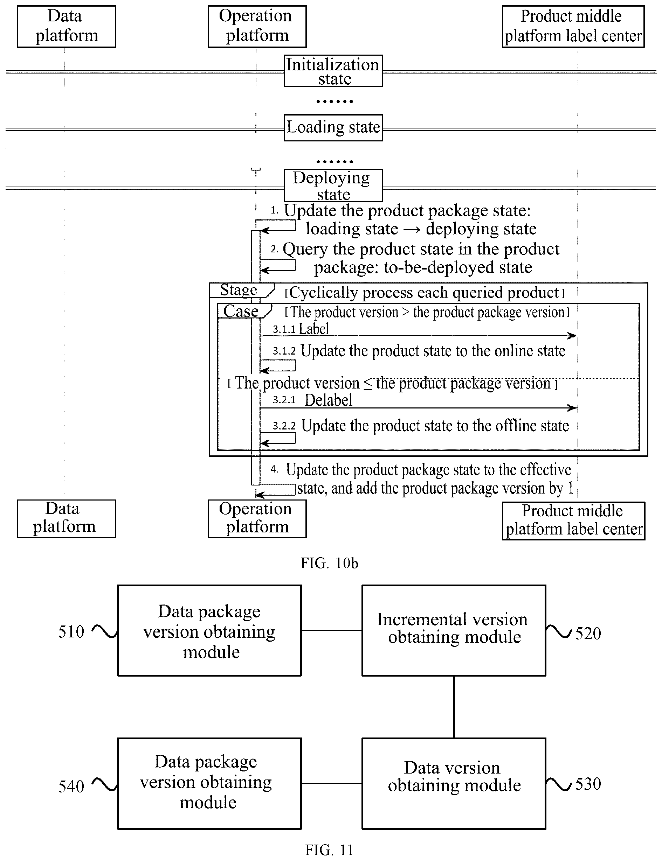

In order to understand the above example, elaboration will be made below from a different perspective. For example, referring to FIG. 10a and FIG. 10b, where FIG. 10a mainly illustrates the product initialization process and the product loading process, and FIG. 10b mainly illustrates the product deployment process. In FIG. 10a, in the product initialization process, when the operation platform receives a notification of adding or updating the product selection pool from the data platform, when there is no product package corresponding to the product selection pool, the product package is created; and when there is a corresponding product package, its product package state is updated from the effective state to the initialization state. At this point, the product initialization process ends and the product loading process starts. In the product loading process, the product package state is updated from the initialization state to the loading state, and then products whose product versions are earlier than or the same as the product package version in the product package are queried. When products are requested to be obtained in batches from the product selection pool, if a product is not among the queried products, the product is created, with the product state being the to-be-deployed state, and the product version being the product package version + 1; and if the product is among the queried products, its product version is updated and its product state is kept unchanged for the case that its product version is the same as the product package version, and its product version is updated and its product state is updated to the to-be-deployed state for the case that its product version is earlier than the product package version. After all the products in the product selection pool are processed, the product loading process ends and the product deployment process starts, as shown in FIG. 10b. In the product deployment process, the product package state is updated from loading state to the deploying state, and then products in the to-be-deployed state in the product package are queried, and each queried product is processed cyclically. When the product version of the queried product is later than the product package version, the product is labeled at the product middle platform label center, and the product state of the product is updated to the online state. When the product version of the queried product is earlier than or the same as the product package version, the product is delabeled at the product middle platform label center, and the product state of the product is updated to the offline state. After the deployment of each queried product is completed, the product package state is updated to the effective state, and the product package version is added by 1. At this point, all the product processing processes end.

FIG. 11 is a block diagram of a structure of a version control apparatus according to an embodiment of the present disclosure. The apparatus is configured to perform the version control method provided in any embodiment of the present disclosure. The apparatus belongs to the same concept as the version control method of the above embodiments. For details not described in detail in the embodiment of the version control apparatus, reference may be made to the above embodiment of the version control method. Referring to FIG. 11, the apparatus may include: a data package version obtaining module 510, an incremental version obtaining module 520, a data version obtaining module 530, and a data package version obtaining module 540. The data package version obtaining module 510 is configured to, in response to a data loading instruction, obtain a plurality of pieces of data to be loaded, a data package corresponding to the plurality of pieces of data to be loaded, and a data package version of the data package, where the data package corresponds to a pool to be loaded, the pool to be loaded includes an item pool or item cluster pool to be loaded, the data package includes at least one item table, and the data to be loaded corresponds to an item to be loaded in the pool to be loaded; the incremental version obtaining module 520 is configured to perform incremental processing on the data package version to obtain an incremental version; the data version obtaining module 530 is configured to load, for each piece of data to be loaded based on an item to be loaded that corresponds to the data to be loaded, the data to be loaded into an item table corresponding to the item to be loaded among the at least one item table, to obtain loaded data, and use the incremental version as a data version of the loaded data; and the data package version obtaining module 540 is configured to use the incremental version as the data package version when the data version of the loaded data corresponding to each piece of data to be loaded is obtained.

On the basis of the apparatus described above, the apparatus may further include:
a to-be-deployed state setting module configured to, after the loaded data is obtained, set a data state of the loaded data to a to-be-deployed state when the data package is not loaded with already loaded data corresponding to the data to be loaded, or when the data package is loaded with already loaded data corresponding to the data to be loaded, and the data version of the already loaded data is earlier than the data package version; and the data package version obtaining module 540 may include:
an online state update unit configured to deploy the loaded data in the to-be-deployed state, and update the data state of the deployed loaded data from the to-be-deployed state to an online state when the data version of the loaded data corresponding to each piece of data to be loaded is obtained; and a data package version obtaining unit configured to use the incremental version as the data package version when the data state of each piece of loaded data is the online state.

On this basis, the version control apparatus described above may further include:
a to-be-deployed state update module configured to, for previously loaded data that is previously loaded into the data package and does not correspond to data to be loaded, update the data state of the previously loaded data in the online state among all the previously loaded data from the online state to the to-be-deployed state; and a data-to-be-deployed determination module configured to determine data to be deployed that is in the to-be-deployed state from data package data in the data package, where the loaded data in the to-be-deployed state is first deployment data whose data version is later than the data package version among the data to be deployed; and the online state update unit may include:
an online state update subunit configured to determine the first deployment data from the data to be deployed, deploy the first deployment data based on a first deployment manner corresponding to the first deployment data, and update the data state of the deployed first deployment data from the to-be-deployed state to the online state.

On this basis, the previously loaded data in the to-be-deployed state is second deployment data whose data version is the same as the data package version among the data to be deployed, and the version control apparatus described above may further include:
an offline state update module configured to determine the second deployment data from the data to be deployed, deploy the second deployment data based on a second deployment manner corresponding to the second deployment data, and update the data state of the deployed second deployment data from the to-be-deployed state to an offline state.

On this basis, the first deployment manner includes adding a data package label corresponding to the data package; and/or the second deployment manner includes deleting a data package label corresponding to the data package.

The version control apparatus described above may further include:
a loading state update module configured to update a data package state of the data package from an effective state to a loading state after the data package corresponding to the plurality pieces of data to be loaded is obtained; a deploying state update module configured to update the loading state to a deploying state after each piece of data to be loaded has been loaded; and an effective state update module configured to update the deploying state to the effective state when the data state of each piece of loaded data is the online state.

On this basis, the version control apparatus described above may further include:
a data package state obtaining module configured to, in response to a breakpoint resumption instruction, obtain the data package state; and an update operation execution module configured to determine, based on the data package state, to perform an update operation on the obtained data to be loaded or on the loaded data in the to-be-deployed state, and perform the update operation based on a determination result.

On this basis, when the data package state is the loading state, the determination result is to perform the update operation on the obtained data to be loaded; and the update operation execution module may include:
a breakpoint loading data obtaining unit configured to determine historical loaded data whose data version is earlier than or the same as the data package version from the data package data in the data package, and use data to be loaded that corresponds to the historical loaded data among the obtained data to be loaded as breakpoint loading data; and a data-to-be-loaded update unit configured to update the obtained data to be loaded based on the breakpoint loading data.

When the data package state is the deploying state, the determination result is to perform the update operation on the loaded data in the to-be-deployed state; and the update operation execution module may include:
a loaded data update unit configured to determine breakpoint deployment data in the to-be-deployed state from the data package data in the data package, and update the loaded data in the to-be-deployed state based on the breakpoint deployment data.

The deploying state update module may include:
a loaded state update unit configured to update the loading state to a loaded state after each piece of data to be loaded has been loaded; and a deploying state update unit configured to, in response to a data deployment instruction input by a user, update the loaded state to the deploying state; and the online state update unit may include:
a loaded data deployment subunit configured to deploy the loaded data in the to-be-deployed state when the data version of the loaded data corresponding to each piece of data to be loaded is obtained, and the data package is in the deploying state.

The version control apparatus described above may further include:
an initial version setting module configured to create the data package, and set the data package version as an initial version when the data package is not created in advance.

The version control apparatus described above may further include:
an offline state setting module configured to, in response to a data package deletion instruction for the data package, set a data state of data package data in the data package to an offline state; and an ineffective state setting module configured to set a data package state of the data package to an ineffective state.

On this basis, when the data package data in the online state is associated with a data package label corresponding to the data package, the version control apparatus may further include:
an association relationship deletion module configured to delete the association relationship between the data package data in the online state and the data package label.

The version control apparatus described above may further include:
an online data determination module configured to, in response to a data package viewing instruction for the data package, determine online data whose data version is the same as the data package version from the data package data in the data package; and an online data return module configured to return the online data to an instruction triggering device for the data package viewing instruction.

The pool to be loaded includes the item cluster pool, the item cluster pool includes at least one item cluster, an item to be loaded in each item cluster includes a first item or a second item clustered based on the first item, and the at least one item table includes at least one base table, and at least one relationship table associated with each base table; and the data version obtaining module 530 may include:
a second loading data obtaining unit configured to, for each item cluster, use data to be loaded that corresponds to the first item in the item cluster as first loading data, and use data to be loaded that corresponds to each second item in the item cluster as second loading data; a first loaded data obtaining unit configured to load the first loading data into a target table corresponding to the first item in the item cluster among the at least one base table, to obtain loaded data of the first item in the item cluster; and a second loaded data obtaining unit configured to, for each piece of second loading data, use the second item corresponding to the second loading data in the item cluster as a current item, and load the second loading data into the relationship table corresponding to the current item among the at least one relationship table associated with the target table, to obtain loaded data of the current item.

According to the version control apparatus provided in this embodiment of the present disclosure, the data package version obtaining module, in response to the data loading instruction, obtains the plurality of pieces of data to be loaded, the data package corresponding to the plurality of pieces of data to be loaded, and the data package version of the data package, where the data package corresponds to the pool to be loaded, the pool to be loaded includes the item pool or the item cluster pool to be loaded, the data package includes the at least one item table, and the data to be loaded corresponds to the item to be loaded in the pool to be loaded; the incremental version obtaining module performs incremental processing on the data package version to obtain the incremental version; the data version obtaining module loads, for each piece of data to be loaded based on an item to be loaded that corresponds to the data to be loaded, the data to be loaded into an item table corresponding to the item to be loaded among the at least one item table, to obtain loaded data, thereby implementing the process of loading the data to be loaded into the data package, and then uses the incremental version as a data version of the loaded data; and the data package version obtaining module uses the incremental version as the data package version when the data version of the loaded data corresponding to each piece of data to be loaded is obtained. According to the apparatus described above, during the data loading process, the data version of the loaded data is controlled based on the incremental version obtained by performing incremental processing on the data package version, and after each piece of loaded data has its own data version, the data package version is controlled based on the incremental version. By a progressive version control policy, the consistency between the data version of each piece of loaded data in the data package and the data package version of the data package is ensured.

The version control apparatus provided in this embodiment of the present disclosure can perform the version control method provided in any embodiment of the present disclosure, and has corresponding functional modules and effects for performing the method.

The plurality of units and modules included in the embodiment of the above version control apparatus are obtained through division merely according to functional logic, but are not limited to the above division, as long as corresponding functions can be implemented. In addition, the names of the plurality of functional units are merely used for mutual distinguishing, and are not intended to limit the scope of protection of the present disclosure.

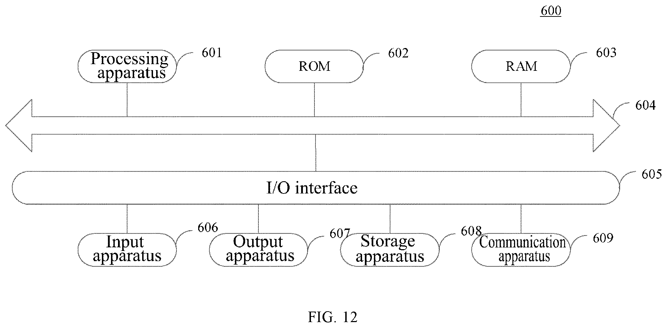

Reference will be made to FIG. 12 below, which is a schematic diagram of a structure of an electronic device (e.g., a terminal device or a server in FIG. 12) 600 suitable for implementing an embodiment of the present disclosure. The electronic device in this embodiment of the present disclosure may include a mobile terminal such as a mobile phone, a notebook computer, a digital broadcast receiver, a personal digital assistant (PDA), a tablet computer (Portable Android Device, PAD), a portable media player (PMP), and a vehicle-mounted terminal (e.g., a vehicle navigation terminal), and a fixed terminal such as a digital television (TV) and a desktop computer. The electronic device 600 shown in FIG. 12 is merely an example, and shall not impose any limitation on the function and scope of use of the embodiments of the present disclosure.

As shown in FIG. 12, the electronic device 600 may include a processing apparatus (e.g., a central processor, a graphics processor) 601 that may perform a variety of appropriate actions and processing in accordance with a program stored in a read-only memory (ROM) 602 or a program loaded from a storage apparatus 608 into a random access memory (RAM) 603. The RAM 603 further stores various programs and data required for the operation of the electronic device 600. The processing apparatus 601, the ROM 602, and the RAM 603 are connected to each other through a bus 604. An input/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, and a gyroscope; an output apparatus 607 including, for example, a liquid crystal display (LCD), a speaker, and a vibrator; the storage apparatus 608 including, for example, a tape and a hard disk; and a communication apparatus 609. The communication apparatus 609 may allow the electronic device 600 to perform wireless or wired communication with other devices to exchange data. Although FIG. 12 shows the electronic device 600 having various apparatuses, it is not required to implement or have all of the shown apparatuses. It may be an alternative to implement or have more or fewer apparatuses.

According to an embodiment of the present disclosure, the process described above with reference to the flowcharts may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 609, installed from the storage apparatus 608, or installed from the ROM 602. When the computer program is executed by the processing apparatus 601, the above-mentioned functions defined in the method of the embodiment of the present disclosure are performed.

The above computer-readable medium described in the present disclosure may be a computer-readable signal medium, or a computer-readable storage medium, or any combination thereof. The computer-readable storage medium may be, for example, electric, magnetic, optical, electromagnetic, infrared, or semiconductor systems, apparatuses, or devices, or any combination thereof. Examples of the computer-readable storage medium may include: an electrical connection having one or more wires, a portable computer magnetic disk, a hard disk, a RAM, a ROM, an erasable programmable read-only memory (EPROM) or a flash memory, an optical fiber, a portable compact disc read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. In the present disclosure, the computer-readable signal medium may include a data signal propagated in a baseband or as a part of a carrier, the data signal carrying computer-readable program code. The propagated data signal may be in various forms, including an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including: electric wires, optical cables, radio frequency (RF), etc., or any suitable combination thereof.

In some implementations, a client and a server can communicate using any currently known or future-developed network protocol such as a HyperText Transfer Protocol (HTTP), and may be connected to digital data communication (for example, communication network) in any form or medium. Examples of the communication network include a local area network (LAN), a wide area network (WAN), an internetwork (e.g., the Internet), a peer-to-peer network (e.g., an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs that, when executed by the electronic device, cause the electronic device to:
in response to a data loading instruction, obtain a plurality of pieces of data to be loaded, a data package corresponding to the plurality of pieces of data to be loaded, and a data package version of the data package, where the data package corresponds to a pool to be loaded, the pool to be loaded includes an item pool or an item cluster pool to be loaded, the data package includes at least one item table, and the data to be loaded corresponds to an item to be loaded in the pool to be loaded; perform incremental processing on the data package version to obtain an incremental version; load, for each piece of data to be loaded based on an item to be loaded that corresponds to the data to be loaded, the data to be loaded into an item table corresponding to the item to be loaded among the at least one item table, to obtain loaded data, and use the incremental version as a data version of the loaded data; and use the incremental version as the data package version when the data version of the loaded data corresponding to each piece of data to be loaded is obtained.

The computer program code for performing the operations in the present disclosure may be written in one or more programming languages or a combination thereof, where the programming languages include an object-oriented programming language, such as Java, Smalltalk, or C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving a remote computer, the remote computer may be connected to a computer of a user over any type of network, including LAN or WAN, or may be connected to an external computer (for example, connected over the Internet using an Internet service provider).

The flowcharts and block diagrams in the accompanying drawings illustrate the possibly implemented architecture, functions, and operations of the system, method, and computer program product according to multiple embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by software, or may be implemented by hardware. The name of a unit does not constitute a limitation on the unit itself in a case. For example, the incremental version obtaining module may alternatively be described as a "a module for performing incremental processing on the data package version to obtain the incremental version".

The functions described herein above may be performed at least partially by one or more hardware logic components. For example, without limitation, exemplary types of hardware logic components that may be used include: a field programmable gate array (FPGA), an application-specific integrated circuit (ASIC), application-specific standard parts (ASSP), a system-on-chip (SOC) system, a complex programming logic device (CPLD), and the like.

In the context of the present disclosure, a machine-readable medium may be a tangible medium that may contain or store a program used by or in combination with an instruction execution system, apparatus, or device. The machine-readable medium may be a machine-readable signal medium or a machine-readable storage medium. The machine-readable medium may include electronic, magnetic, optical, electromagnetic, infrared, or semiconductor systems, apparatus, or devices, or any suitable combination thereof. Examples of the machine-readable storage medium may include an electrical connection based on one or more wires, a portable computer disk, a hard disk, a RAM, a ROM, an EPROM or a flash memory, an optical fiber, a CD-ROM, an optical storage device, a magnetic storage device, or any suitable combination thereof.

According to one or more embodiments of the present disclosure, [Example 1] provides a version control method. The method may include:
in response to a data loading instruction, obtaining a plurality of pieces of data to be loaded, a data package corresponding to the plurality of pieces of data to be loaded, and a data package version of the data package, where the data package corresponds to a pool to be loaded, the pool to be loaded includes an item pool or an item cluster pool to be loaded, the data package includes at least one item table, and the data to be loaded corresponds to an item to be loaded in the pool to be loaded;
performing incremental processing on the data package version to obtain an incremental version;
loading, for each piece of data to be loaded based on an item to be loaded that corresponds to the data to be loaded, the data to be loaded into an item table corresponding to the item to be loaded among the at least one item table, to obtain loaded data, and using the incremental version as a data version of the loaded data; and
using the incremental version as the data package version when the data version of the loaded data corresponding to each piece of data to be loaded is obtained.

According to one or more embodiments of the present disclosure, [Example 2] provides the method according to Example 1. After the loaded data is obtained, the version control method described above may further include:
setting a data state of the loaded data to a to-be-deployed state when the data package is not loaded with already loaded data corresponding to the data to be loaded, or when the data package is loaded with already loaded data corresponding to the data to be loaded, and the data version of the already loaded data is earlier than the data package version; and
the using the incremental version as the data package version when the data version of the loaded data corresponding to each piece of data to be loaded is obtained includes:
   deploying the loaded data in the to-be-deployed state, and updating the data state of the deployed loaded data from the to-be-deployed state to an online state when the data version of the loaded data corresponding to each piece of data to be loaded is obtained; and
   using the incremental version as the data package version when the data state of each piece of loaded data is the online state.

According to one or more embodiments of the present disclosure, [Example 3] provides the method according to Example 2. The version control method described above may further include:
for previously loaded data that is previously loaded into the data package and does not correspond to the data to be loaded, updating the data state of the previously loaded data in the online state among all the previously loaded data from the online state to the to-be-deployed state; and
determining data to be deployed that is in the to-be-deployed state from data package data in the data package, where the loaded data in the to-be-deployed state includes first deployment data whose data version is later than the data package version among the data to be deployed; and
the deploying the loaded data in the to-be-deployed state, and updating the data state of the deployed loaded data from the to-be-deployed state to an online state may include:
   determining the first deployment data from the data to be deployed, deploying the first deployment data based on a first deployment manner corresponding to the first deployment data, and updating the data state of the deployed first deployment data from the to-be-deployed state to the online state.

According to one or more embodiments of the present disclosure, [Example 4] provides the method according to Example 3. When the previously loaded data in the to-be-deployed state is second deployment data whose data version is the same as the data package version among the data to be deployed, the version control method described above may further include:
determining the second deployment data from the data to be deployed, deploying the second deployment data based on a second deployment manner corresponding to the second deployment data, and updating the data state of the deployed second deployment data from the to-be-deployed state to an offline state.

According to one or more embodiments of the present disclosure, [Example 5] provides the method according to Example 4. The first deployment manner includes adding a data package label corresponding to the data package; and/or the second deployment manner includes deleting a data package label corresponding to the data package.

According to one or more embodiments of the present disclosure, [Example 6] provides the method according to Example 2. After the data package corresponding to the plurality pieces of data to be loaded is obtained, the version control method described above may further include:
updating a data package state of the data package from an effective state to a loading state;
updating the loading state to a deploying state after each piece of data to be loaded has been loaded; and
updating the deploying state to the effective state when the data state of each piece of loaded data is the online state.

According to one or more embodiments of the present disclosure, [Example 7] provides the method according to Example 6. The version control method described above may further include:
in response to a breakpoint resumption instruction, obtaining the data package state; and
determining, based on the data package state, to perform an update operation on the obtained data to be loaded or on the loaded data in the to-be-deployed state, and performing the update operation based on a determination result.

According to one or more embodiments of the present disclosure, [Example 8] provides the method according to Example 7. When the data package state is the loading state, the determination result is to perform the update operation on the obtained data to be loaded; and
the performing the update operation based on a determination result may include:
determining historical loaded data whose data version is earlier than or the same as the data package version from the data package data in the data package, and using data to be loaded that corresponds to the historical loaded data among the obtained data to be loaded as breakpoint loading data; and
updating the obtained data to be loaded based on the breakpoint loading data.

According to one or more embodiments of the present disclosure, [Example 9] provides the method according to Example 7. When the data package state is the deploying state, the determination result is to perform the update operation on the loaded data in the to-be-deployed state; and
the performing the update operation based on a determination result may include:
determining breakpoint deployment data in the to-be-deployed state from the data package data in the data package, and updating the loaded data in the to-be-deployed state based on the breakpoint deployment data.

According to one or more embodiments of the present disclosure, [Example 10] provides the method according to Example 6. The updating the loading state to a deploying state after each piece of data to be loaded has been loaded may include:
updating the loading state to a loaded state after each piece of data to be loaded has been loaded; and
in response to a data deployment instruction input by a user, updating the loaded state to the deploying state; and
the deploying the loaded data in the to-be-deployed state when the data version of the loaded data corresponding to each piece of data to be loaded is obtained may include:
   deploying the loaded data in the to-be-deployed state when the data version of the loaded data corresponding to each piece of data to be loaded is obtained, and the data package is in the deploying state.

According to one or more embodiments of the present disclosure, [Example 11] provides the method according to Example 1. The version control method described above may further include:
creating the data package, and setting the data package version as an initial version when the data package is not created in advance.

According to one or more embodiments of the present disclosure, [Example 12] provides the method according to Example 1. The version control method described above may further include:
in response to a data package deletion instruction for the data package, setting a data state of data package data in the data package to an offline state; and
setting a data package state of the data package to an ineffective state.

According to one or more embodiments of the present disclosure, [Example 13] provides the method according to Example 12. When data package data in an online state is associated with the data package label corresponding to the data package, the version control method described above may further include:
deleting an association relationship between the data package data in the online state and the data package label.

According to one or more embodiments of the present disclosure, [Example 14] provides the method according to Example 1. The version control method described above may further include:
in response to a data package viewing instruction for the data package, determining online data whose data version is the same as the data package version from the data package data in the data package; and
returning the online data to an instruction triggering device for the data package viewing instruction.

According to one or more embodiments of the present disclosure, [Example 15] provides the method according to Example 1. The pool to be loaded is an item cluster pool, the item cluster pool includes at least one item cluster, an item to be loaded in each item cluster includes a first item or a second item clustered based on the first item, and at least one item table includes at least one base table, and at least one relationship table associated with each base table; and
the loading, for each piece of data to be loaded based on an item to be loaded that corresponds to the data to be loaded, the data to be loaded into an item table corresponding to the item to be loaded among at least one item table, to obtain loaded data may include:
for each item cluster, using data to be loaded that corresponds to the first item in the item cluster as first loading data, and using data to be loaded that corresponds to each second item in the item cluster as second loading data;
loading the first loading data into a target table corresponding to the first item in the item cluster among the at least one base table, to obtain loaded data of the first item in the item cluster; and
for each piece of second loading data, using the second item corresponding to the second loading data in the item cluster as a current item, and loading the second loading data into the relationship table corresponding to the current item among the at least one relationship table associated with the target table, to obtain loaded data of the current item.

According to one or more embodiments of the present disclosure, [Example 16] provides a version control apparatus. The apparatus may include:
a data package version obtaining module configured to, in response to a data loading instruction, obtain a plurality of pieces of data to be loaded, a data package corresponding to the plurality of pieces of data to be loaded, and a data package version of the data package, where the data package corresponds to a pool to be loaded, the pool to be loaded includes an item pool or an item cluster pool to be loaded, the data package includes at least one item table, and the data to be loaded corresponds to an item to be loaded in the pool to be loaded;
an incremental version obtaining module configured to perform incremental processing on the data package version to obtain an incremental version;
a data version obtaining module configured to load, for each piece of data to be loaded based on an item to be loaded that corresponds to the data to be loaded, the data to be loaded into an item table corresponding to the item to be loaded among the at least one item table, to obtain loaded data, and use the incremental version as a data version of the loaded data; and
a data package version obtaining module configured to use the incremental version as the data package version when the data version of the loaded data corresponding to each piece of data to be loaded is obtained.

Furthermore, although the various operations are depicted in a specific order, it should not be construed as requiring these operations to be performed in the specific order shown or in a sequential order. Under certain circumstances, multitasking and parallel processing may be advantageous. Similarly, although a plurality of implementation details are included in the foregoing discussions, these details should not be construed as limiting the scope of the present disclosure. Some features that are described in the context of separate embodiments may alternatively be implemented in combination in a single embodiment. In contrast, various features described in the context of a single embodiment may alternatively be implemented in a plurality of embodiments individually or in any suitable subcombination.

## Claims

1. A version control method, comprising:
in response to a data loading instruction, obtaining a plurality of pieces of data to be loaded, a data package corresponding to the plurality of pieces of data to be loaded, and a data package version of the data package, wherein the data package corresponds to a pool to be loaded, the pool to be loaded comprises an item pool or an item cluster pool to be loaded, the data package comprises at least one item table, and the data to be loaded corresponds to an item to be loaded in the pool to be loaded;
performing incremental processing on the data package version to obtain an incremental version;
loading, for each piece of data to be loaded based on an item to be loaded that corresponds to the data to be loaded, the data to be loaded into an item table corresponding to the item to be loaded among the at least one item table, to obtain loaded data, and using the incremental version as a data version of the loaded data; and
using the incremental version as the data package version when the data version of the loaded data corresponding to each piece of data to be loaded is obtained.

2. The method according to claim 1, wherein after the loaded data is obtained, the method further comprises:
setting a data state of the loaded data as a to-be-deployed state when the data package is not loaded with already loaded data corresponding to the data to be loaded, or when the data package is loaded with already loaded data corresponding to the data to be loaded, and the data version of the already loaded data is earlier than the data package version; and
the using the incremental version as the data package version when the data version of the loaded data corresponding to each piece of data to be loaded is obtained comprises:
deploying the loaded data in the to-be-deployed state, and updating the data state of the deployed loaded data from the to-be-deployed state to an online state when the data version of the loaded data corresponding to each piece of data to be loaded is obtained; and
using the incremental version as the data package version when the data state of each piece of loaded data is the online state.

3. The method according to claim 2, further comprising:
for previously loaded data that is previously loaded into the data package and does not correspond to data to be loaded, updating the data state of the previously loaded data in the online state among all the previously loaded data from the online state to the to-be-deployed state; and
determining data to be deployed that is in the to-be-deployed state from data package data in the data package, wherein the loaded data in the to-be-deployed state is first deployment data whose data version is later than the data package version among the data to be deployed; and
the deploying the loaded data in the to-be-deployed state, and updating the data state of the deployed loaded data from the to-be-deployed state to an online state comprises:
determining the first deployment data from the data to be deployed, deploying the first deployment data based on a first deployment manner corresponding to the first deployment data, and updating the data state of the deployed first deployment data from the to-be-deployed state to the online state.

4. The method according to claim 3, wherein the previously loaded data in the to-be-deployed state is second deployment data whose data version is the same as the data package version among the data to be deployed, and the method further comprises:
determining the second deployment data from the data to be deployed, deploying the second deployment data based on a second deployment manner corresponding to the second deployment data, and updating the data state of the deployed second deployment data from the to-be-deployed state to an offline state.

5. The method according to claim 4, wherein at least one of the following is satisfied:
the first deployment manner comprises adding a data package label corresponding to the data package; or
the second deployment manner comprises deleting a data package label corresponding to the data package.

6. The method according to claim 2, wherein after the data package corresponding to the plurality pieces of data to be loaded is obtained, the method further comprises:
updating a data package state of the data package from an effective state to a loading state;
updating the loading state to a deploying state after each piece of data to be loaded has been loaded; and
updating the deploying state to the effective state when the data state of each piece of loaded data is the online state.

7. The method according to claim 6, further comprising:
in response to a breakpoint resumption instruction, obtaining the data package state; and
determining, based on the data package state, to perform an update operation on the obtained data to be loaded or on the loaded data in the to-be-deployed state, and performing the update operation based on a determination result.

8. The method according to claim 7, wherein when the data package state is the loading state, the determination result is to perform the update operation on the obtained data to be loaded; and
the performing the update operation based on a determination result comprises:
determining historical loaded data whose data version is earlier than or the same as the data package version from the data package data in the data package, and using data to be loaded that corresponds to the historical loaded data among the obtained data to be loaded as breakpoint loading data; and
updating the obtained data to be loaded based on the breakpoint loading data.

9. The method according to claim 7, wherein when the data package state is the deploying state, the determination result is to perform the update operation on the loaded data in the to-be-deployed state; and
the performing the update operation based on a determination result comprises:
determining breakpoint deployment data in the to-be-deployed state from the data package data in the data package, and updating the loaded data in the to-be-deployed state based on the breakpoint deployment data.

10. The method according to claim 6, wherein the updating the loading state to a deploying state after each piece of data to be loaded has been loaded comprises:
updating the loading state to a loaded state after each piece of data to be loaded has been loaded; and
in response to a data deployment instruction input by a user, updating the loaded state to the deploying state; and
the deploying the loaded data in the to-be-deployed state when the data version of the loaded data corresponding to each piece of data to be loaded is obtained comprises:
deploying the loaded data in the to-be-deployed state when the data version of the loaded data corresponding to each piece of data to be loaded is obtained, and the data package is in the deploying state.

11. The method according to claim 1, further comprising:
creating the data package, and setting the data package version as an initial version when the data package is not created in advance.

12. The method according to claim 1, further comprising:
in response to a data package deletion instruction for the data package, setting a data state of data package data in the data package to an offline state; and
setting a data package state of the data package to an ineffective state.

13. The method according to claim 12, wherein data package data in an online state is associated with a data package label corresponding to the data package, and the method further comprises:
deleting an association relationship between the data package data in the online state and the data package label.

14. The method according to claim 1, further comprising:
in response to a data package viewing instruction for the data package, determining online data whose data version is the same as the data package version from data package data in the data package; and
returning the online data to an instruction triggering device for the data package viewing instruction.

15. The method according to claim 1, wherein the pool to be loaded is the item cluster pool, the item cluster pool comprises at least one item cluster, an item to be loaded in each item cluster comprises a first item or a second item clustered based on the first item, and the at least one item table comprises at least one base table, and at least one relationship table associated with each base table; and
the loading, for each piece of data to be loaded based on an item to be loaded that corresponds to the data to be loaded, the data to be loaded into an item table corresponding to the item to be loaded among at least one item table, to obtain loaded data comprises:
for each item cluster, using data to be loaded that corresponds to the first item in the item cluster among each piece of data to be loaded as first loading data, and using data to be loaded that corresponds to each second item in the item cluster as second loading data;
loading the first loading data into a target table corresponding to the first item in the item cluster among the at least one base table, to obtain loaded data of the first item in the item cluster; and
for each piece of second loading data, using the second item corresponding to the second loading data in the item cluster as a current item, and loading the second loading data into a relationship table corresponding to the current item among the at least one relationship table associated with the target table, to obtain loaded data of the current item.

16. A version control apparatus, comprising:
a data package version obtaining module configured to, in response to a data loading instruction, obtain a plurality of pieces of data to be loaded, a data package corresponding to the plurality of pieces of data to be loaded, and a data package version of the data package, wherein the data package corresponds to a pool to be loaded, the pool to be loaded comprises an item pool or an item cluster pool to be loaded, the data package comprises at least one item table, and the data to be loaded corresponds to an item to be loaded in the pool to be loaded;
an incremental version obtaining module configured to perform incremental processing on the data package version to obtain an incremental version;
a data version obtaining module configured to load, for each piece of data to be loaded based on an item to be loaded that corresponds to the data to be loaded, the data to be loaded into an item table corresponding to the item to be loaded among the at least one item table, to obtain loaded data, and use the incremental version as a data version of the loaded data; and
a data package version obtaining module configured to use the incremental version as the data package version when the data version of the loaded data corresponding to each piece of data to be loaded is obtained.

17. An electronic device, comprising:
at least one processor; and
a memory configured to store at least one program, wherein
the at least one program, when executed by the at least one processor, causes the at least one processor to implement the version control method according to any one of claims 1 to 15.

18. A computer-readable storage medium storing a computer program, wherein the computer program, when executed by a processor, causes the version control method according to any one of claims 1 to 15 to be implemented.

19. A computer program product, comprising a computer program carried on a non-transitory computer-readable medium, wherein the computer program comprises program code for performing the version control method according to any one of claims 1 to 15.
